# EUROPÄISCHE PATENTSCHRIFT

(11) **EP 0 987 138 B1**
(45) Veröffentlichungstag und Bekanntmachung des Hinweises auf die Patenterteilung: **15.04.2009**
(21) Anmeldenummer: 99117843.5
(22) Anmeldetag: 10.09.1999
(51) Int. Cl.: B60K 35/00, B60K 37/04, G07C 5/08

(54) **Vorrichtung und Verfahren zum Anzeigen von Piktogrammen in einem Fahrzeug**
Method and means of displaying pictograms in a vehicle
Dispositif et méthode de visualisation des pictogrammes dans un véhicule

(30) Priorität: 16.09.1998 DE 19842286
(43) Veröffentlichungstag der Anmeldung: 22.03.2000
(73) Patentinhaber: Continental Automotive GmbH, 30165 Hannover (DE); MAN Nutzfahrzeuge Aktiengesellschaft, 80995 München (DE)
(72) Erfinder: Schradi, Stefan, Dipl.-Ing. (FH), 78048 Villingen-Schwenningen (DE); Lemke, Rainer, Dipl.-Ing. (FH), 78647 Trossingen (DE); Adams, Jürgen, Dipl.-Ing. (FH), 78052 Villingen-Schwenningen (DE); Klostermeier, Michael, Dipl.-Ing., 82152 Martinsried (DE); Spaderna, Josef, Dipl.-Ing., 85258 Weichs (DE)

(56) Entgegenhaltungen:
- DE-A- 19 627 923
- US-A- 4 053 868
- US-A- 4 287 504
- US-A- 5 450 321

## Beschreibung

Die Erfindung betrifft eine Vorrichtung zum Anzeigen von Piktogrammen in einem Fahrzeug gemäß dem Oberbegriff des ersten Anspruchs und ein Verfahren zum Betreiben dieser Vorrichtung gemäß dem Oberbegriff des sechsten Anspruchs.

Insbesondere in Nutzfahrzeugen und Bussen sind deren Armaturenbretter mit einer Vielzahl von Symbolleuchten ausgestattet, um dem Fahrer diverse Informationen zu vermitteln. Da zur Ausstattung moderner Fahrzeuge immer mehr elektronische Meß-, Steuer- und Regeleinrichtungen gehören und demzufolge dem Fahrer immer mehr Informationen zur Kenntnis zu bringen sind, werden Vorrichtungen gesucht, die die steigende Zahl von Informationen in einer für den Fahrer überschaubaren und gut wahrnehmbaren Weise anzeigen. So sind in neuerer Zeit zentrale Informationsmodule bekannt geworden, die aus einem LC-Display bestehen, das im Armaturenbrett im direkten Blickfeld des Fahrers angeordnet ist und auf dem mittels einer elektronischen Steuereinheit Informationen bedarfsgerecht zur Anzeige gebracht werden.

Bei den Informationen, die dem Fahrer anzuzeigen sind, handelt es sich vielfach um eine Auskunft zum Betriebszustand von Fahrzeugeinrichtungen. Überdies sind dem Fahrer auch Störungen von Fahrzeugeinrichtungen sowie Warnungen vor Gefahren schnell und unmißverständlich zur Kenntnis zu bringen. Zu diesem Zweck setzen die Fahrzeugeinrichtungen oder ihnen zugeordnete Betätigungseinrichtungen zumeist in Form elektrischer Signale spezifische Meldungen ab, die mittels der im Armaturenbrett angeordneten Anzeigemittel visualisiert werden. Unabhängig davon, ob als Anzeigemittel herkömmliche Symbolleuchten oder das Display eines Informationsmoduls eingesetzt werden, hat es sich weitgehend durchgesetzt, derartige Meldungen durch standardisierte Piktogramme darzustellen, wobei diese Piktogramme dem Fahrer durch ihre stilisierte Darstellung einer bestimmten Fahrzeugeinrichtung die betreffende Information vermitteln.

Weil aus ergonomischen Gründen und aus Kostengründen die Anzahl der Symbolleuchten im Armaturenbrett reduziert werden sollte, kommen immer häufiger zentrale optoelektronische Informationsmodule zum Einsatz. Nun läßt sich aber auch bei diesen Informationsmodulen aus technischen und ökonomischen Gründen die zur Verfügung stehende aktive Anzeigefläche des Displays nicht beliebig vergrößern, um die steigende Zahl von gleichzeitig auftretenden Meldungen zur Anzeige zu bringen. Auch ist es aus ergonomischen Gründen und aus Gründen der Sicherheit nicht sinnvoll, eine Vielzahl von Meldungen gleichzeitig zur Anzeige zu bringen, weil der Fahrer immer nur eine bestimmte Menge an Informationen gleichzeitig aufnehmen kann und eine allzu große Informationsfülle ihn auch von seiner eigentlichen Fahraufgabe ablenken könnte. Ebensowenig darf man die Größe der Piktogramme verkleinern, nur um mehr Piktogramme gleichzeitig auf der zur Verfügung stehenden aktiven Anzeigefläche des Displays zur Anzeige zu bringen, denn dem stehen zur Beibehaltung einer guten Ablesbarkeit und eindeutigen Erkennbarkeit auch gesetzliche Vorschriften entgegen.

Ein derartiger Display ist aus der US 4 287 504 A bekannt.

Die US 4 287 504 A beschreibt eine Vorrichtung zum Anzeigen von Piktogrammen in einem Fahrzeug, bestehend aus einer Steuereinheit und einem Display, wobei die Steuereinheit das Display steuert, und das Display in übereinander angeordnete Symbolfelder aufgeteilt ist, wobei die Steuereinheit in jedem Symbolfeld gleichzeitig immer nur ein Piktogramm zur Anzeige bringt. Weiterhin bringt die Steuereinheit jedes neu anzuzeigende Piktogramm je nach Priorität der anzuzeigenden Informationen in unterschiedlichen Feldern unter, unanbhängig von der chronologische Reihenfolge. Weiterhin ist ein Bedienelement vorgesehen, mit dem ein zusammenhangender Ausschnitt aus den aneinandergereihten Piktogrammen in den Symbolfeldern des Displays zur Anzeige gebracht werden kann, wenn gleichzeitig mehr Piktogramme zur Anzeige zu bringen sind, als auf dem Display Symbolfelder vorhanden sind.

Es ist nun die Aufgabe der vorliegenden Erfindung, eine Vorrichtung und ein Verfahren zum Anzeigen von Piktogrammen in einem Fahrzeug aufzuzeigen, wobei die Vorrichtung aus einer Steuereinheit und einem Display, insbesondere einem LC-Display besteht und die Steuereinheit das Display steuert, bei der auch mehrere gleichzeitig vorliegende Meldungen über den Betriebszustand von verschiedenen Fahrzeugeinrichtungen in Form von Piktogrammen in gut wahrnehmbarer Weise angezeigt werden.

Die Aufgabe wird durch die Merkmale des ersten und die Merkmale des sechsten Anspruchs gelöst. Die jeweils davon abhängigen Ansprüche zeigen vorteilhafte Weiterbildungen und Ausgestaltungen der gefundenen Lösung.

Die vorrichtungsbezogene Lösung zeichnet sich dadurch aus,
a) daß bei einer aus einer Steuereinheit und einem Display, insbesondere einem LC-Display bestehenden Vorrichtung zum Anzeigen von Piktogrammen in einem Fahrzeug das Display in aneinandergereihte Symbolfelder aufgeteilt ist, wobei die Steuereinheit in jedem Symbolfeld gleichzeitig immer nur ein Piktogramm zur Anzeige bringt,
b) daß die Steuereinheit jedes neu anzuzeigende Piktogramm in den aneinandergereihten Symbolfeldern stets in einem bestimmten Symbolfeld zur Anzeige bringt und die bereits angezeigten Piktogramme ohne Änderung ihrer Reihenfolge um ein Symbolfeld verschiebt, und
c) daß ein Bedienelement vorgesehen ist, mit dem ein zusammenhängender Ausschnitt aus den aneinandergereihten Piktogrammen in den Symbolfeldern des Displays zur Anzeige gebracht werden kann, wenn gleichzeitig mehr Piktogramme zur Anzeige zu bringen sind, als auf dem Display Symbolfelder vorhanden sind.

Diese Lösung hat den Vorteil, daß immer die jüngsten Meldungen angezeigt werden und der Fahrer stets auf eine ruhig wirkende, stehende Anzeige blickt. Wenn der Fahrer ältere, aber momentan nicht angezeigte Meldungen einsehen möchte, so ist ihm dieses durch die Betätigung des vorgesehenen Bedienelementes leicht möglich, denn anhand des Bedienelementes kann ein zusammenhängender Ausschnitt aus der Reihe der bereits angezeigten Piktogramme in den im Display vorhandenen Symbolfeldern zur Anzeige gebracht werden.

Anhand von 8 Figuren soll die Erfindung nun näher erläutert werden.

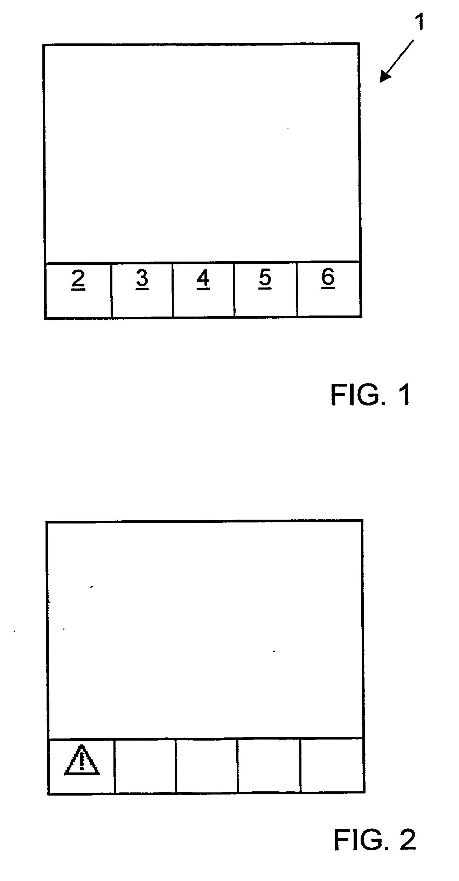

**Figur 1** zeigt ein Display 1, in dessen unterem Teil der aktiven Anzeigefläche eine Reihe von beispielsweise fünf Symbolfeldern 2, 3, 4, 5, 6 angeordnet ist. Je nach der tatsächlichen Beschaffenheit - insbesondere der Größe der aktiven Anzeigefläche - des in der Realisierung gewählten Displays kann die Zahl der Symbolfelder größer oder kleiner als in diesem Beispiel sein. Der obere Teil der aktiven Anzeigefläche soll anderen Zwecken als der Anzeige von Piktogrammen vorbehalten sein. Hier könnten beispielsweise Meldungen eines Navigationssystems oder Texte zur Anzeige gebracht werden.

Wenn nun von einer Meß-, Steuer- oder Regeleinrichtung des Fahrzeugs eine Meldung abgesetzt wird, die den Betrachter des Displays, d. h. in der Regel den Fahrer des Fahrzeugs beispielsweise über einen Betriebszustand informiert, auf eine Störung aufmerksam macht oder vor einer Gefahr warnt, wird entsprechend der **Figur 2** ein dieser Meldung zugeordnetes Piktogramm zur Anzeige gebracht, indem die das Display steuernde Steuereinheit das entsprechende Piktogramm in einem der im Display vorhandenen Symbolfelder anzeigt. Es ist vorteilhaft, jedes neu anzuzeigende Piktogramm zunächst in einem ganz bestimmten Symbolfeld der Symbolfeldreihe darzustellen, weil durch eine solche Festlegung in einer für den Betrachter leicht merkbaren Weise eine zeitliche Rangfolge für die anzuzeigenden Piktogramme definierbar ist. In dem hier dargestellten Beispiel soll jedes neu anzuzeigende Piktogramm zunächst in dem für den Betrachter linken Symbolfeld 2 angezeigt werden.

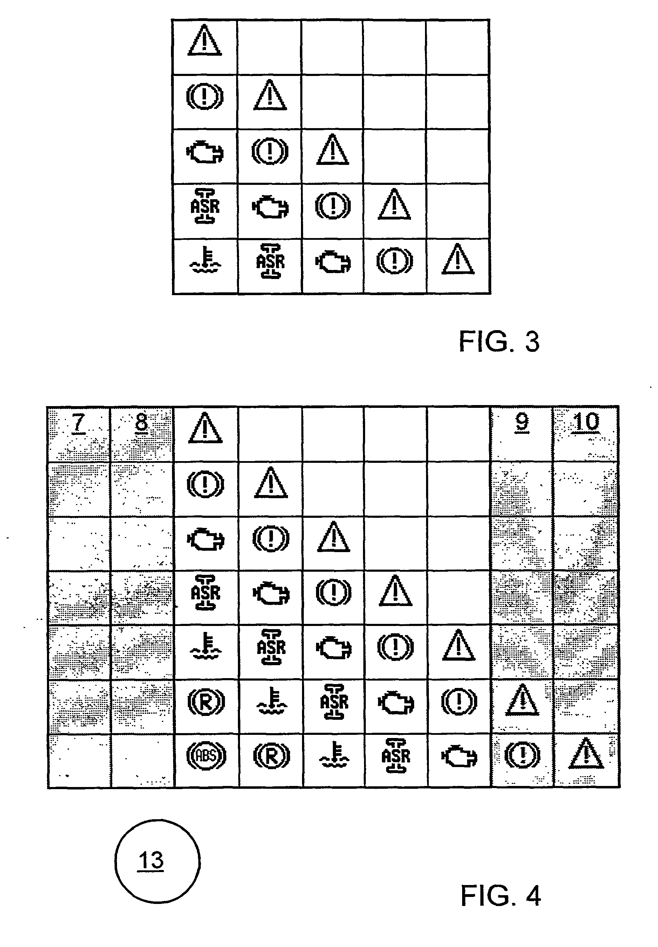

Die **Figur 3** läßt nun erkennen, was erfindungsgemäß geschieht, wenn aufgrund weiterer gleichzeitig anliegender oder anhaltend anzuzeigender Meldungen zusätzliche Piktogramme zur Anzeige gebracht werden müssen. In dieser Figur wie auch den nachfolgenden Figuren ist der Einfachheit halber der obere Teil der aktiven Anzeigefläche des Displays 1 nicht mehr dargestellt, weil er nicht erfindungsrelevant ist. Vielmehr sind mehrere zeitlich aufeinanderfolgende Anzeigesituationen in einem zusammenfassenden Block dargestellt, wobei jede Zeile eines Blocks einer bestimmten Anzeigesituation entspricht.

Wie erwähnt, wird jedes neu anzuzeigende Piktogramm zunächst in dem Symbolfeld 2, d. h. für den Betrachter linksbündig in der Symbolfeldreihe angezeigt, wobei bereits angezeigte Piktogramme aus der Sicht des Betrachters jeweils um ein Symbolfeld nach rechts verschoben werden. Dadurch entsteht, wie aus der Figur 3 ersichtlich, eine lückenlose Folge von Piktogrammen, wobei in dieser Reihe die jüngste Meldung links und die älteste Meldung rechts steht. Diese Anordnung macht deutlich erkennbar, in welcher chronologischen Reihenfolge die durch die Piktogramme angezeigten Meldungen aufgetreten sind. Daß die jüngste Meldung stets durch das Piktogramm im linken Symbolfeld angezeigt wird, ist für Länder mit europäischen Sprachen eine vorteilhafte, aber keineswegs notwendige Vereinbarung. Für Anwender, deren bevorzugte Lesrichtung von rechts nach links gerichtet ist, könnte für die jüngste Meldung das rechte Symbolfeld in der Symbolfeidreihe vereinbart werden, wobei dann alle nachfolgenden Meldungen eine Verschiebung der Piktogramme nach links bewirken.

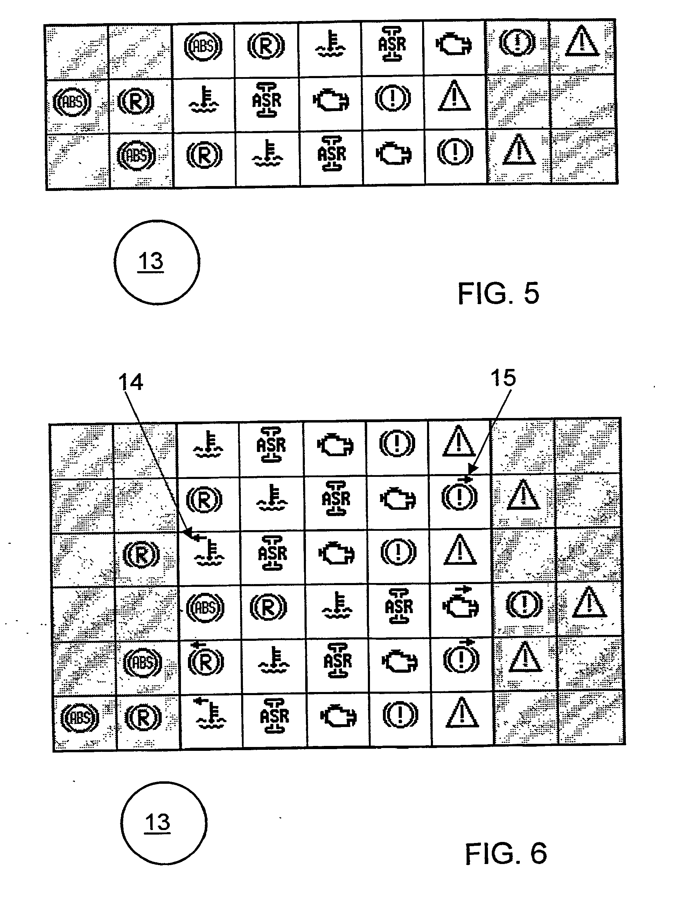

**Figur 4** verdeutlicht, was erfindungsgemäß geschieht, wenn gleichzeitig mehr Piktogramme zur Anzeige zu bringen sind, als innerhalb der aktiven Anzeigefläche des Displays Symbolfelder vorhanden sind. Die dargestellte aus den fünf Symbolfeldern 2, 3, 4, 5, 6 bestehende Symbolfeldreihe wird fiktiv zu ihren beiden Seiten mit für den Betrachter auf dem Display nicht sichtbaren Symbolfeldern 7, 8, 9,10 erweitert. Ferner wird ein mit der Steuereinheit der Vorrichtung in Verbindung stehendes Bedienelement 13 vorgesehen, mit dem dann, wenn gleichzeitig mehr Piktogramme zur Anzeige zu bringen sind, als Symbolfelder innerhalb der aktiven Anzeigefläche des Displays vorhanden sind, ein zusammenhängender Ausschnitt aus der Reihe der anzuzeigenden Piktogramme in den Symbolfeldern zur Anzeige gebracht werden kann, wie dies die **Figur 5** verdeutlicht. Dazu betätigt der Fahrer das Bedienelement 13, wodurch er die angezeigten Piktogramme in der Symbolfeldreihe sozusagen verschieben kann. Wenn er die Piktogramme von älteren und damit am rechten Rand des Displays in den nicht sichtbaren Bereich geschobenen Meldungen einsehen möchte, schiebt er mittels des Bedienelementes 13 die komplette Symbolfeldreihe nach links, bis die ihn interessierenden Piktogramme auf der aktiven Anzeigefläche des Displays sichtbar werden. Auch kann er den ursprünglichen Ausschnitt aus der Symbolfeldreihe wieder herstellen, indem er die Symbolfeidreihe mit dem Bedienelement 13 wieder nach rechts verschiebt. Die Verschiebung der Symbolfeldreihe ist dabei nur fiktiv, also lediglich eine für den Betrachter feststellbare Wirkung, die aber tatsächlich durch eine entsprechende Ansteuerung der auf der aktiven Anzeigefläche des Displays sichtbaren Symbolfelder hervorgerufen wird. Denn in der technischen Realisierung werden die Piktogramme in einen der Steuereinheit zugeordneten Speicher der Reihe nach eingeschrieben, aus welchem die Steuereinheit die Piktogramme entsprechend der mit dem Bedienelement 13 gewählten Einstellung ausliest und in den auf dem Display sichtbaren Symbolfeldem 2, 3, 4, 5, 6 zur Anzeige bringt. Damit ist die Anzahl der insgesamt in der Symbolfeldreihe in den sichtbaren und in den auf der aktiven Anzeigefläche des Displays nicht sichtbaren Symbolfeldern darstellbaren Piktogramme von der Speicherkapazität des der Steuereinheit zugeordneten Speichers abhängig. Statt vom Verschieben der Symbolfeldreihe zu sprechen, könnte man auch sagen, daß der Betrachter mittels des Bedienelementes 13 ein aus einer festen Anzahl von Symbolfeldern bestehendes Fenster über die aus einer linearen Anordnung von Symbolfeldern bestehende Symbolfeldreihe schiebt. Beide Darstellungen sind für den Betrachter wirkungsgleich und werden durch dieselbe Ansteuerung des Displays von der Steuereinheit hervorgerufen.

Vorteilhafterweise gibt die Steuereinheit dem Fahrer einen Hinweis durch Einblendung eines optischen Zeichens 14, 15 auf dem Display, vorzugsweise am äußeren Rand der aktiven Anzeigefläche, wenn sich Piktogramme in den nicht sichtbaren Symbolfeldern 7, 8, 9, 10 befinden. Diese Ausgestaltung der erfindungsgemäßen Vorrichtung wird in der **Figur 6** gezeigt. Der Hinweis mit einem optischen Zeichen kann beispielsweise durch einen entsprechend gerichteten Pfeil 14, 15 erfolgen, der in dem am Rand der aktiven Anzeigefläche angeordneten Symbolfeld 2 oder 6 erscheint, wenn an dieses Symbolfeld 2 oder 6 ein ein Piktogramm enthaltendes nicht sichtbares Symbolfeld 8 oder 9 angrenzt.

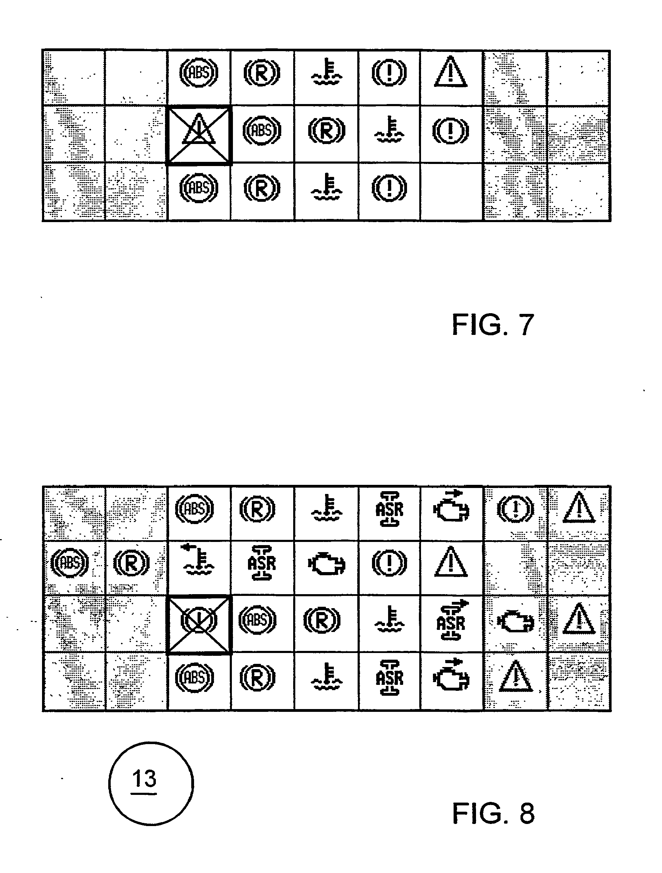

Wenn Meldungen von Meß-, Steuer- und Regeleinrichtungen des Fahrzeugs nach einer gewissen Zeit aufgehoben werden, weil sich zum Beispiel der Betriebszustand einer Fahrzeugeinrichtung geändert hat oder ein Gefahrenzustand nicht mehr besteht, beispielsweise wenn die Beleuchtungsanlage wieder ausgeschaltet wurde oder der Tank wieder befüllt ist, verschiebt die dem Display zugeordnete Steuereinheit - wie aus der **Figur 7** ersichtlich - das bis dahin für die entsprechende Meldung angezeigte Piktogramm in dasjenige Symbolfeld, in dem vereinbarungsgemäß stets die jüngste Meldung angezeigt wird. In der Darstellung der Figur 1 wäre dies das Symbolfeld 2. Die Lücke, die dadurch entsteht, daß das Piktogramm mit der erloschenen Meldung aus der Symbolfeldreihe herausgenommen wird, wird automatisch dadurch geschlossen, daß bei der Plazierung des entnommenen Piktogramms im Symbolfeld 2 gleichzeitig alle rechts vom Symbolfeld 2 stehenden Piktogramme um ein Symbolfeld nach rechts verschoben werden.

Die hier beschriebene Vorgehensweise beim Erlöschen einer Meldung gilt auch für den Fall, daß sich ein Piktogramm im Zeitpunkt der Aufhebung seiner ihm zugrunde liegenden Meldung nicht im sichtbaren Bereich der Symbolfeldreihe befindet. Falls zu dem Zeitpunkt der Aufhebung einer Meldung aufgrund einer Betätigung des Bedienelementes 13 in den sichtbaren Symbolfeldern auf der aktiven Fläche des Displays nicht die Piktogramme derjüngsten Meldungen dargestellt sind, wird gemäß der **Figur 8** von der Steuereinheit eine vorangegangene Verschiebung der Symbolfeldreihe rückgängig gemacht und gleichzeitig im Symbolfeld 2 dasjenige Piktogramm angezeigt, dessen Meldung aufgehoben wurde. Dabei führen die einzelnen von der Steuereinheit ausgeführten Arbeitsschritte nicht zu einer raschen Folge von nacheinander angezeigten Displaydarstellungen, sondern in den auf dem Display sichtbaren Symbolfeldern 2, 3, 4, 5, 6 wird - wie in der dritten Zeile der Figur 8 dargestellt - sofort der Endzustand aller Veränderungen zur Anzeige gebracht.

Um in besonderer Weise darauf hinzuweisen, daß es sich um eine Meldung handelt, deren Ursache aufgehoben wurde, ist es vorteilhaft, das entsprechende Piktogramm in besonderer Weise zu markieren. Die Markierung könnte zum Beispiel im Vergleich zu der Darstellung der übrigen Piktogramme in einer Inversdarstellung von der Füllfarbe des Piktogramms und der Hintergrundfarbe des Symbolfeldes bestehen oder das Piktogramm könnte, wie in den **Figuren 7 und 8** dargestellt, in dem entsprechenden Symbolfeld durchgestrichen, umrandet oder in einer sonstwie eindeutig erkennbaren und unterscheidbaren Weise dargestellt sein.

Überdies startet die dem Display zugeordnete Steuereinheit mit der Aufhebung einer Meldung einen Zeitgeber. Nach einer vorzugsweise einstellbaren Vorhaltezeit, die standardmäßig im Bereich von 10 bis 15 Sekunden liegen kann, wird dann das der aufgehobenen Meldung zugeordnete Piktogramm endgültig aus der Symbolfeldreihe gelöscht. Alle rechts neben dem zu löschenden Piktogramm stehenden Piktogramme werden sodann von der Steuereinheit um ein Symbolfeld nach links verschoben, um die durch die Löschung entstandene Lücke in der Symbolfeldreihe zu schließen. Die Vorhaltezeit soll so gewählt sein, daß für den Fahrer genügend Zeit für eine bewußte Wahrnehmung der Änderung bei den angezeigten Meldungen besteht. Andererseits sollen aufgehobene Meldungen auch nicht übermäßig lange vorgehalten werden, weil dadurch die Anzeige unnötig mit nicht mehr gültigen Meldungen überfrachtet würde. Überdies könnte das Bedienelement 13 auch so ausgestaltet sein, daß der Fahrer durch eine Betätigung dieses Bedienelementes 13 quittieren kann, daß er eine aufgehobene Meldung wahrgenommen hat, worauf das der Meldung zugeordnete und infolge der Aufhebung der Meldung markierte Piktogramm erlischt und damit aus der Symbolfeldreihe entfernt wird, ohne den Ablauf einer Vorhaltezeit abzuwarten.

Sollte während der Vorhaltezeit bis zum endgültigen Erlöschen eines Piktogramms eine neue Meldung zur Anzeige zu bringen sein, wird diese neue Meldung mit dem ihr zugeordneten Piktogramm in der bereits beschriebenen Weise in dem jeweils für die jüngste Meldung bestimmten Symbolfeld 2 angezeigt, wobei alle bisher in der Symbolfeldreihe stehenden Piktogramme, also auch ein vor seiner Löschung stehendes und deshalb markiertes Piktogramm, um ein Symbolfeld nach rechts verschoben werden.

Das für die Wahl des sichtbaren Ausschnitts aus der Symbolfeldreihe verwendete Bedienelement 13 kann beispielsweise als Drehsteller, Schieber, Taster oder als eine Kombination dieser Ausgestaltungen ausgebildet sein. Auch kann es in einigen Anwendungsfällen sinnvoll sein, den Fahrer in der Wahrnehmung neuer oder in ihrem Status geänderter Meldungen durch akustische Signale zu unterstützen. Für diesen Fall wird ein von der Steuereinheit steuerbarer Signalgeber vorgesehen, der ein akustisches Signal abgibt, wenn ein neues Piktogramm zur Anzeige gebracht wird oder ein Piktogramm aus der Anzeige gelöscht werden soll.

Die gefundene Lösung hat den Vorteil, daß sie alle Nachteile einer kontinuierlichen Laufbandanzeige vermeidet. Laufbandanzeigen, bei denen in einem bestimmten zeitlichen Takt alle aktuell vorhandenen Meldungen nacheinander zur Anzeige gebracht werden, wirken sehr unruhig und verlangen vom Fahrer, für eine bestimmte Information zum richtigen Zeitpunkt auf das Display zu schauen. Gerade dieses kann aber von einem Fahrer, der sich vornehmlich auf seine eigentliche Fahraufgabe zu konzentrieren hat, eben nicht verlangt werden.

Statt dessen bietet die gefundene Lösung dem Fahrer die Möglichkeit, wann immer er dies wünscht, sich mittels des Bedienelementes 13 diejenige Information auf das Display zu holen, die er benötigt, vorausgesetzt, es liegen so viele Meldungen vor, daß sie nicht alle gleichzeitig in den Symbolfeldern auf der aktiven Fläche des Displays angezeigt werden können. Andernfalls sieht er die Piktogramme der vorliegenden Meldungen bereits ohne die Betätigung des Bedienelementes 13.

Die Informationsdarstellung erfolgt in gut wahrnehmbarer Weise durch dem Fahrer bekannte Piktogramme. Der Fahrer wird auch nicht mit einer Flut gleichzeitig angezeigter Meldungen konfrontiert, sondern er entscheidet selbst, welche Informationen er einsehen möchte, wobei ihm jedoch keine neue Meldung und auch keine Änderung einer Meldung entgeht, weil in diesem Fall die dem Display zugeordnete Steuereinheit aktiv in die Anzeige eingreift. Die Informationsdarstellung ist auch so gewählt, daß zu jedem Zeitpunkt die zeitliche Reihenfolge der Meldungen für den Fahrer erkennbar ist.

## Patentansprüche

1. Vorrichtung zum Anzeigen von Piktogrammen in einem Fahrzeug, bestehend aus einer Steuereinheit und einem Display, wobei die Steuereinheit das Display steuert, und
a) das Display in horizontal aneinandergereihte Symbolfelder (2, 3, 4, 5, 6) aufgeteilt ist, wobei die Steuereinheit in jedem Symbolfeld gleichzeitig immer nur ein Piktogramm zur Anzeige bringt, und
b) die Steuereinheit jedes neu anzuzeigende Piktogramm in den aneinandergereihten Symbolfeldern (2, 3, 4, 5, 6) stets in einem bestimmten Symbolfeld (2) zur Anzeige bringt und die bereits angezeigten Piktogramme ohne Änderung ihrer Reihenfolge um ein Symbolfeld verschiebt, und
c) ein Bedienelement (13) vorgesehen ist, mit dem ein zusammenhängender Ausschnitt aus den aneinandergereihten Piktogrammen in den Symbolfeldern des Displays zur Anzeige gebracht werden kann, wenn gleichzeitig mehr Piktogramme zur Anzeige zu bringen sind, als auf dem Display Symbolfelder vorhanden sind.

2. Vorrichtung nach Anspruch 1, **dadurch gekennzeichnet, daß** die Steuereinheit auf dem Display ein optisches Zeichen (14, 15) einblendet, nachdem ein Piktogramm aus dem sichtbaren Bereich des Displays hinausgeschoben wurde.

3. Vorrichtung nach einem der vorangegangenen Ansprüche, **dadurch gekennzeichnet,**
a) **daß** ein Zeitgeber vorgesehen ist, den die Steuereinheit mit dem Eintreffen eines Befehles zum Löschen eines Piktogramms startet,
b) **daß** die Steuereinheit ein zu löschendes Piktogramm für eine durch den Zeitgeber bemessene Vorhaltezeit in demjenigen Symbolfeld (2) zur Anzeige bringt, das für jedes neu anzuzeigende Piktogramm vorgesehen ist,
c) und **daß** die Steuereinheit nach Ablauf der Vorhaltezeit das zu löschende Piktogramm aus der Reihe der anzuzeigenden Piktogramme entfernt.

4. Vorrichtung nach einem der vorangegangenen Ansprüche, **dadurch gekennzeichnet, daß** das Bedienelement (13) als Drehsteller, Schieber, Taster oder als eine Kombination dieser Ausgestaltungen ausgebildet ist.

5. Vorrichtung nach einem der vorangegangenen Ansprüche, **dadurch gekennzeichnet, daß** ein von der Steuereinheit gesteuerter akustischer Signalgeber vorgesehen ist, der ein akustisches Signal abgibt, wenn ein neues Piktogramm zur Anzeige gebracht wird oder ein Piktogramm aus der Anzeige gelöscht werden soll.

6. Verfahren zum Anzeigen von Piktogrammen mit einer in einem Fahrzeug angeordneten Vorrichtung, die aus einer Steuereinheit und einem Display, besteht, wobei die Steuereinheit das Display steuert, und
a) die Piktogramme in Symbolfeldern (2, 3, 4, 5, 6) des Displays angezeigt werden, wobei die Symbolfelder (2, 3, 4, 5, 6) zu einer horizontalen Symbolfeldreihe aneinandergereiht angeordnet sind, und
b) jedes neu anzuzeigende Piktogramm solange in einem ganz bestimmten Symbolfeld (2) der Symbolfeldreihe angezeigt wird, bis ein Piktogramm mit einem jüngeren Zeitrang anzuzeigen ist, und
c) mit der Anzeige eines neuen Piktogramms alle bereits in der Symbolfeldreihe angezeigten Piktogramme um ein Symbolfeld verschoben werden, und
d) die auf dem Display sichtbare Symbolfeldreihe (2, 3, 4, 5, 6) an ihrem Anfang und/oder Ende fiktiv um nicht sichtbare Symbolfelder (7, 8, 9, 10) erweitert wird, um Piktogramme auf diese nicht sichtbaren Symbolfelder (7, 8, 9, 10) zu verschieben, falls gleichzeitig mehr Piktogramme anzuzeigen sind, als auf dem Display sichtbare Symbolfelder (2, 3, 4, 5, 6) vorhanden sind, und
e) mittels eines Bedienelementes (13) aus der Symbolfeldreihe ein Ausschnitt aneinandergereihter Piktogramme in den sichtbaren Symbolfeldern auf dem Display anzeigbar ist, indem die Symbolfeldreihe mit dem Bedienelement (13) für einen Betrachter scheinbar verschoben wird.

7. Verfahren nach Anspruch 6, **dadurch gekennzeichnet, daß** ein zu löschendes Piktogramm an seinem Platz in der Symbolfeldreihe entfernt und in demjenigen Symbolfeld (2) zur Anzeige gebracht wird, das für jedes neu anzuzeigende Piktogramm vorgesehen ist, wobei alle diejenigen neben diesem Symbolfeld stehenden Piktogramme um ein Symbolfeld verschoben werden, bis die durch die Herausnahme des zu löschenden Piktogramms entstandene Lücke in der Symbolfeldreihe wieder geschlossen ist.

8. Verfahren nach Anspruch 6 oder 7, **dadurch gekennzeichnet, daß** die Wahrnehmung eines zu löschenden Piktogramms durch die Betätigung des Bedienelementes (13) quittiert werden kann, worauf das zu löschende Piktogramm unverzüglich aus der Symbolfeldreihe entfernt wird.

9. Verfahren nach Anspruch 7 oder 8, **dadurch gekennzeichnet, daß** von der Steuereinheit eine vorangegangene Verschiebung der Symbolfeldreihe rückgängig gemacht wird, indem auf den im Display sichtbaren Symbolfeldern (2, 3, 4, 5, 6) die zuletzt zur Anzeige gebrachten Piktogramme zusammen mit demjenigen Piktogramm angezeigt werden, dessen Meldung aufgehoben wurde, falls zu dem Zeitpunkt der Aufhebung einer Meldung aufgrund einer Betätigung des Bedienelementes (13) in den sichtbaren Symbolfeldern auf der aktiven Fläche des Displays nicht die Piktogramme der jüngsten Meldungen dargestellt sind.

10. Verfahren nach einem der vorangegangenen Ansprüche 6 bis 9, **dadurch gekennzeichnet, daß** ein zu löschendes Piktogramm, das in demjenigen Symbolfeld (2) angezeigt wird, das in der Symbolfeldreihe zur Anzeige jedes neu anzuzeigende Piktogramms vorgesehen ist, in einer von der Darstellung der übrigen Piktogramme unterscheidbaren Weise markiert wird.

11. Verfahren nach Anspruch 10, **dadurch gekennzeichnet, daß** die Markierung eines zu löschenden Piktogramms in einer Inversdarstellung seiner Füllfarbe und/oder Hintergrundfarbe besteht.

12. Verfahren nach Anspruch 10, **dadurch gekennzeichnet, daß** die Markierung eines zu löschenden Piktogramms in einer Umrandung des Symbolfeldes oder einer Durchstreichung des Piktogramms besteht.

13. Verfahren nach einem der vorangegangenen Ansprüche 6 bis 12, **dadurch gekennzeichnet, daß** die Steuereinheit die durch die Löschung eines Piktogramms entstandene Lücke in der Symbolfeldreihe dadurch schließt, daß sie alle Piktogramme mit älterem Zeitrang um ein Symbolfeld aufrücken läßt.

## Claims

1. Device for displaying pictograms in a vehicle, composed of a control unit and a display unit, the control unit controlling the display unit, and
a) the display unit being divided into symbol fields (2, 3, 4, 5, 6) which are arranged horizontally one next to the other in a row, the control unit only ever displaying one pictogram in each symbol field simultaneously, and
b) the control unit always displaying in a specific symbol field (2) each new pictogram which is to be displayed in the symbol fields (2, 3, 4, 5, 6) which are arranged one next to the other in a row, and displacing by one symbol field the pictograms which have already been displayed, without changing their order, and
c) a control element (13) being provided with which a coherent section of the pictograms which are arranged one next to the other in a row can be displayed in the symbol fields of the display unit if more pictograms are to be displayed simultaneously than symbol fields which are present on the display unit.

2. Device according to Claim 1, **characterized by** the fact that the control unit fades in a visual character (14, 15) on the display unit after a pictogram has been displaced out of the visible region of the display unit.

3. Device according to Claim 1 of the preceding claims, **characterized by** the fact that
a) a timer which the control unit starts when an instruction to delete a pictogram arrives is provided,
b) the control unit displays a pictogram which is to be deleted, for a retention time, dimensioned by the timer, in that symbol field (2) which is provided for each pictogram which is to be newly displayed, and
c) after the retention time has expired, the control unit removes the pictogram which is to be deleted from the row of pictograms which is to be displayed.

4. Device according to one of the preceding claims, **characterized by** the fact that the control element (13) is designed as a rotary actuator, slide, momentary-contact switch or as a combination of these refinements.

5. Device according to one of the preceding claims, **characterized by** the fact that an audible signal transmitter is provided which is controlled by the control unit and outputs an audible signal if a new pictogram is displayed or a pictogram is to be deleted from the display.

6. Method for displaying pictograms with a device which is arranged in a vehicle and which is composed of a control unit and a display unit, the control unit controlling the display unit, and
a) the pictograms being displayed in symbol fields (2, 3, 4, 5, 6) of the display unit, the symbol fields (2, 3, 4, 5, 6) being arranged one next to the other to form a horizontal row of symbol fields, and
b) each pictogram which is to be newly displayed being displayed in a quite specific symbol field (2) of the row of symbol fields until a pictogram with a more recent time priority is to be displayed, and
c) all the pictograms which have already been displayed in the row of symbol fields being displaced by one symbol field when a new pictogram is displayed, and
d) the row of symbol fields (2, 3, 4, 5, 6) which is visible on the display unit being expanded at the start and/or end of the said row in virtual fashion by invisible symbol fields (7, 8, 9, 10), in order to displace pictograms onto these invisible symbol fields (7, 8, 9, 10) if more pictograms are to be displayed than symbol fields (2, 3, 4, 5, 6) which are visible on the display unit are present simultaneously, and
e) a section of pictograms which are arranged one next to the other in a row in the visible symbol fields being able to be displayed on the display unit by means of a control element (13) from the row of symbol fields, in that the row of symbol fields is, for a viewer, apparently is displaced using the control element (13).

7. Method according to Claim 6, **characterized by** the fact that a pictogram which is to be deleted is removed from its location in the row of symbol fields and is displayed in that symbol field (2) which is provided for each pictogram which is to be newly displayed, all those pictograms which are located next to this symbol field being displaced by one symbol field until the gap in the row of symbol fields which is produced by the removal of the pictogram which is to be deleted is closed again.

8. Method according to Claim 6 or 7, **characterized by** the fact that the viewing of a pictogram which is to be deleted can be acknowledged by activating the control element (13), in response to which the pictogram which is to be deleted is immediately removed from the row of symbol fields.

9. Method according to Claim 7 or 8, **characterized by** the fact that the control unit reverses a preceding displacement of the row of symbol fields, in that the pictograms which were last displayed are displayed on the symbol fields (2, 3, 4, 5, 6) which are visible in the display unit, together with that pictogram whose message has been canceled, if, at the time when a message was canceled, the pictograms of the latest messages were not represented in the visible symbol fields in the active area of the display unit, because the control element (13) had been activated.

10. Method according to one of the preceding Claims 6 to 9, **characterized by** the fact that a pictogram which is to be deleted and which is displayed in that symbol field (2) which is provided in the row of symbol fields for displaying each pictogram which is to be newly displayed is marked in a way which is distinguishable from the way of representing the other pictograms.

11. Method according to Claim 10, **characterized by** the fact that the marking of a pictogram which is to be deleted consists in an inverted way of representation of its filling-in color and/or background color.

12. Method according to Claim 10, **characterized by** the fact that the marking of a pictogram which is to be deleted consists in outlining the symbol field or putting a bar through the pictogram.

13. Method according to one of the preceding Claims 6 to 12, **characterized by** the fact that the control unit closes the gap in the row of symbol fields which has been produced as a result of the deletion of a pictogram by allowing all the pictograms to move on by one symbol field with an older time priority.

## Revendications

1. Dispositif permettant de visualiser des pictogrammes dans un véhicule, composé d'une unité de commande et d'un écran d'affichage, où l'unité de commande contrôle l'écran d'affichage et
a) où l'écran d'affichage est divisé en champs pour symboles (2, 3, 4, 5, 6) alignés horizontalement l'un à côté de l'autre, l'unité de commande ne visualisant simultanément, dans chaque champ pour symboles, toujours qu'un seul pictogramme, et
b) où l'unité de commande visualise tout nouveau pictogramme qui doit être affiché dans les champs pour symboles (2, 3, 4, 5, 6) alignés l'un à côté de l'autre, toujours dans un champ pour symboles (2) déterminé et déplace les pictogrammes déjà visualisés d'un champ pour symboles sans modifier leur ordre de succession et
c) où il est prévu un organe de commande (13) avec lequel il est possible de visualiser un fenêtrage cohérent parmi les pictogrammes alignés l'un à côté de l'autre dans les champs pour symboles de l'écran d'affichage, lorsque doivent être affichés simultanément un nombre de pictogrammes supérieur au nombre de champs pour symboles existant sur l'écran d'affichage.

2. Dispositif selon la revendication 1, **caractérisé par le fait que** l'unité de commande insère sur l'écran d'affichage un signe optique (14, 15), lorsqu'un pictogramme a été déplacé hors de la partie visible de l'écran d'affichage.

3. Dispositif selon l'une des revendications précédentes, **caractérisé par le fait**
a) **qu'**il est prévu une horloge que l'unité de commande fait démarrer lorsqu'il arrive une instruction d'effacement d'un pictogramme,
b) **que** l'unité de commande continue à visualiser, pendant un laps de temps de conservation mesuré par l'horloge, le pictogramme qui doit être effacé, dans le champ pour symboles (2) qui est prévu pour chaque nouveau pictogramme à afficher
c) et **que** l'unité de commande supprime de la série des pictogrammes à visualiser, après écoulement du laps de temps de conservation, le pictogramme qui doit être effacé.

4. Dispositif selon l'une des revendications précédentes, **caractérisé par le fait que** l'organe de commande (13) est conçu sous la forme de bouton rotatif, de curseur, de touche ou de combinaison de ces configurations.

5. Dispositif selon l'une des revendications précédentes, **caractérisé par le fait qu'**il est prévu un émetteur de signaux acoustiques contrôlé par l'unité de commande, lequel émetteur délivre un signal acoustique lorsqu'un nouveau pictogramme est visualisé ou lorsqu'un pictogramme doit être effacé de l'affichage.

6. Procédé permettant de visualiser des pictogrammes avec un dispositif monté dans un véhicule et composé d'une unité de commande et d'un écran d'affichage, où l'unité de commande contrôle l'écran d'affichage et
a) où les pictogrammes sont visualisés dans des champs pour symboles (2, 3, 4, 5, 6) de l'écran d'affichage, les champs pour symboles (2, 3, 4, 5, 6) étant alignés horizontalement l'un à côté de l'autre, et
b) où tout nouveau pictogramme qui doit être affiché est visualisé dans un champ pour symboles (2) bien déterminé de la série de champs pour symboles jusqu'à ce qu'un pictogramme de rang plus récent soit visualisé et
c) où avec la visualisation d'un nouveau pictogramme, tous les pictogrammes déjà visualisés dans la série des champs pour symboles sont décalés d'un champ pour symboles et
d) où la série des champs pour symboles (2, 3, 4, 5, 6) visibles sur l'écran d'affichage est complétée fictivement, à son début et/ou à sa fin, de champs pour symboles non visibles (7, 8, 9, 10) pour décaler des pictogrammes sur ces champs pour symboles non visibles (7, 8, 9, 10), dans le cas où doivent être affichés simultanément un nombre de pictogrammes supérieur au nombre de champs pour symboles (2, 3, 4, 5, 6) visibles existant sur l'écran d'affichage et
e) où au moyen d'un organe de commande (13), un fenêtrage de pictogrammes alignés les uns à côté des autres dans les champs pour symboles visibles sur l'écran d'affichage, ce fenêtrage étant extrait de la série de champs pour symboles, peut être visualisé en décalant avec l'organe de commande (13), virtuellement pour un observateur, la série des champs pour symboles.

7. Procédé selon la revendication 6, **caractérisé par le fait qu'**un pictogramme qui doit être effacé est enlevé de son emplacement dans la série des champs pour symboles et est visualisé dans le champ pour symboles (2) qui est prévu pour tout nouveau pictogramme à visualiser, alors que tous les pictogrammes qui se trouvent à côté de ce champ pour symboles sont décalés d'un champ pour symboles jusqu'à ce que l'intervalle intervenant dans la série des champs pour symboles soit refermé par la suppression du pictogramme à effacer.

8. Procédé selon la revendication 6 ou 7, **caractérisé par le fait que** la perception d'un pictogramme à effacer peut être confirmée en actionnant l'organe de commande (13), à la suite de quoi le pictogramme à effacer est immédiatement supprimé de la série de champs pour symboles.

9. Procédé selon la revendication 7 ou 8, **caractérisé par le fait que** l'unité de commande annule un décalage de la série de champs pour symboles exécuté précédemment en visualisant, sur les champs pour symboles (2, 3, 4, 5, 6) visibles sur l'écran d'affichage, les pictogrammes visualisés en dernier, en commun avec le pictogramme dont le message a été supprimé, si, au moment de la suppression d'un message, en raison d'un actionnement de l'organe de commande (13), les pictogrammes des messages les plus récents ne sont pas représentés dans les champs pour symboles visibles sur la surface active de l'écran d'affichage.

10. Procédé selon l'une des revendications précédentes 6 à 9, **caractérisé par le fait qu'**un pictogramme à effacer, qui est visualisé dans le champ pour symboles (2) prévu, dans la série des champs pour symboles, pour visualiser tout nouveau pictogramme à afficher, est repéré d'une manière permettant de le différencier de la représentation des autres pictogrammes.

11. Procédé selon la revendication 10, **caractérisé par le fait que** le repérage d'un pictogramme à effacer consiste en une représentation inverse de sa teinte de remplissage et/ou de la teinte de l'arrière-plan.

12. Procédé selon la revendication 10, **caractérisé par le fait que** le repérage d'un pictogramme à effacer est constitué par un encadrement du champ pour symboles ou par une barre d'effacement sur le pictogramme.

13. Procédé selon l'une des revendications précédentes 6 à 12, **caractérisé par le fait que** l'unité de commande ferme l'intervalle formé dans la série des champs pour symboles par l'effacement d'un pictogramme, en décalant d'un champ pour symboles tous les pictogrammes de rang plus ancien.
